# FASCICULE DE BREVET EUROPEEN

(11) **EP 1 431 628 B1**
(45) Date de publication et mention de la délivrance du brevet: **21.09.2005**
(21) Numéro de dépôt: 03293237.8
(22) Date de dépôt: 19.12.2003
(51) Int. Cl.: F16H 61/42, B60K 41/26

(54) **Système de freinage pour un véhicule entraîné par au moins un moteur hydrostatique**
Bremssystem für ein Fahrzeug mit mindestens einem hydrostatischem Antriebsmotor
Brake system for vehicle driven by at least one hydrostatic drive motor

(30) Priorité: 20.12.2002 FR 0216294
(43) Date de publication de la demande: 23.06.2004
(73) Titulaire: POCLAIN HYDRAULICS INDUSTRIE, 60411 Verberie (FR)
(72) Inventeur: Magnien, Cédric, 60117 Vauciennes (FR); Litot, Mikael, 64283 Darmstadt (DE); Schubert, Christian, 64293 Darmstadt (DE)
(74) Mandataire: Intes, Didier Gérard André

(56) Documents cités:
- US-A- 5 467 598
- US-A- 6 027 179
- US-A1- 2001 049 318

## Description

La présente invention concerne un système de freinage pour un véhicule entraîné par au moins un moteur hydraulique alimenté en circuit fermé par au moins une pompe à cylindrée variable, le système comprenant des moyens de freinage par friction du moteur, des moyens de commande du freinage, des moyens pour déterminer un niveau d'actionnement desdits moyens de commande et pour détecter une situation de freinage d'urgence ou une situation de freinage normal en fonction du niveau d'actionnement des moyens de commande du freinage et des moyens de gestion du freinage aptes, en situation de freinage normal, à commander un freinage hydrostatique progressif et, en situation de freinage d'urgence, un freinage hydrostatique brusque.

Un système de ce type est connu par US 2001/049318.

En situation de freinage normal, ce système connu réalise un freinage hydrostatique progressif en réduisant progressivement la cylindrée de la pompe. Lorsque la situation de freinage d'urgence est détectée, la cylindrée de la pompe est réduite beaucoup plus rapidement et, lorsque cette cylindrée a atteint une valeur nulle, les moyens de freinage par friction sont actionnés.

Le véhicule auquel s'applique le système de freinage de l'invention est en particulier un engin de travail, par exemple un engin de chantier ou un engin agricole. En situation de travail, l'engin se déplace à une vitesse de travail relativement lente, n'excédant pas en général une dizaine de kilomètres à l'heure. Pour son déplacement entre plusieurs sites de travail, l'engin peut atteindre une vitesse de déplacement sur route qui est plus rapide.

Le freinage hydrostatique progressif doit être efficace, sans pour autant générer, pour le conducteur de l'engin, un inconfort inacceptable. Le système de freinage d'un engin de ce type doit être performant à la fois en condition de travail et sur route.

On cherche de plus en plus à limiter la durée du déplacement des véhicules du type précité entre deux sites de travail, ce qui nécessite d'augmenter la vitesse maximale de déplacement sur route de ces véhicules. On est ainsi conduit à concevoir des véhicules dont la vitesse maximale de déplacement sur route peut atteindre 40 km/h, voire davantage.

Le système de freinage connu par US 2001/049318 permet de réaliser un freinage d'urgence lorsque les circonstances l'exigent. Toutefois, son freinage normal, uniquement hydrostatique, risque de ne pas être toujours efficace dans certaines situations de déplacement du véhicule, en particulier sur route et pour un engin se déplaçant à une vitesse relativement élevée. Par exemple, lorsque le moteur thermique tourne vite du fait d'un couple de retenue insuffisant, ce freinage normal peut ne pas être suffisant. Ainsi, il est souvent nécessaire de recourir au freinage d'urgence, qui est inconfortable.

Les moyens de freinage par friction ne sont mis en oeuvre que pour le freinage d'urgence, à l'issue du freinage hydrostatique d'urgence. Cette précaution est censée éviter de prévoir un frein de grande dimension. C'est toutefois au début d'un freinage d'urgence qu'il est nécessaire de réduire très rapidement la vitesse du véhicule, ce que le freinage hydrostatique brusque seul ne réalise qu'imparfaitement. En outre, dans ce système, il n'est pas tenu compte de la vitesse du véhicule pour doser le freinage hydrostatique, que le freinage soit normal ou d'urgence. De ce fait, ce système ne permet pas de garantir systématiquement un arrêt du véhicule sur une distance compatible avec les exigences de sécurité sans générer des à-coups incompatibles avec le confort du conducteur du véhicule.

La présente invention vise à proposer un système de freinage amélioré, permettant un freinage normal et un freinage d'urgence.

Ce but est atteint grâce au fait que les moyens de commande du freinage sont aptes à commander le freinage par friction et le freinage hydrostatique, ces freinages étant combinés et au fait que, en situation de freinage normal, les moyens de gestion du freinage sont aptes à commander le freinage hydrostatique progressif en provoquant une diminution progressive du rapport entre le débit de fluide refoulé par la pompe et la cylindrée active du moteur, selon une consigne déterminée en fonction du niveau d'actionnement des moyens de commande du freinage, d'un paramètre représentatif de la vitesse du véhicule, de la cylindrée active de la pompe et de la cylindrée active du moteur, tandis que, en situation de freinage d'urgence, lesdits moyens de gestion sont aptes à commander successivement une diminution brusque du rapport entre le débit de fluide refoulé par la pompe et la cylindrée active du moteur, puis un freinage hydrostatique progressif.

Ainsi, avec l'invention, le freinage par friction est activé simultanément avec le freinage hydrostatique, aussi bien lors d'un freinage normal que lors d'un freinage d'urgence.

La consigne de freinage hydrostatique permet de déterminer la diminution progressive du rapport entre le débit de fluide refoulé par la pompe et la cylindrée active du moteur. Cette consigne est fonction des paramètres précités. Les moyens de commande du freinage comprennent par exemple une pédale qui est enfoncée par le conducteur pour actionner les moyens de freinage. La course d'enfoncement de cette pédale peut être prise comme témoin du niveau d'actionnement des moyens de commande. On peut également choisir d'autres témoins. Par exemple, les moyens de freinage par friction peuvent être mis en coopération entre eux par l'alimentation en fluide de freinage d'un vérin. Le niveau d'actionnement des moyens de commande peut être représenté par la pression de fluide de freinage dans le circuit de freinage, en particulier dans un tel vérin.

Le paramètre représentant la vitesse du véhicule peut être la vitesse du véhicule en elle-même, détectée par des moyens appropriés, ou bien tout autre paramètre servant à calculer cette vitesse, par exemple la vitesse du ou des moteurs hydrauliques d'entraînement du véhicule. Si la cylindrée active de la pompe et celle du moteur hydraulique sont connues, de même qu'est connu le diamètre des roues du véhicule, la vitesse de ce véhicule peut être calculée en fonction de ces données et de la vitesse d'un moteur qui sert à entraîner la pompe. Dans ce cas, le paramètre représentatif de la vitesse du véhicule peut être la vitesse de ce moteur d'entraînement de la pompe, en tenant compte des données précitées.

Pour le freinage normal, le freinage mécanique, dû à l'activation des moyens de freinage par friction, est assisté par un freinage hydrostatique qui, en provoquant la diminution progressive du rapport entre le débit de fluide refoulé par la pompe et la cylindrée active du moteur, rend le freinage hydrostatique, donc le freinage combiné, plus efficace. En effet, pour une cylindrée active donnée de fonctionnement du moteur, la diminution du débit de fluide refoulé par la pompe permet de diminuer la vitesse de rotation du rotor du moteur.

De même, pour une valeur donnée du débit de fluide refoulé par la pompe, l'augmentation de la cylindrée du moteur permet de diminuer la vitesse de ce dernier. De plus, l'augmentation de la cylindrée du moteur augmente son couple et améliore l'efficacité du freinage.

Lors du freinage normal, on fait en sorte que le freinage hydrostatique soit progressif, c'est-à-dire qu'il soit efficace sans pour autant générer pour le conducteur de l'engin un inconfort inacceptable. En effet, si la diminution du débit de fluide refoulé par la pompe peut être réalisée de manière parfaitement régulière, par exemple en modifiant l'inclinaison du plateau de came d'une pompe conventionnelle, ce n'est pas toujours le cas de l'augmentation de la cylindrée active du moteur qui, par exemple pour des moteurs à piston radiaux, varie en général par paliers.

Schématiquement, si le débit de fluide refoulé par la pompe reste constant, une augmentation de la cylindrée du moteur conduisant à doubler cette cylindrée diminue brutalement de moitié la vitesse de rotation du rotor de ce moteur.

Ainsi, si le freinage est déclenché alors que le moteur fonctionne dans sa petite cylindrée active, on diminue d'abord le débit de fluide refoulé par la pompe de manière progressive jusqu'à atteindre un débit jugé compatible avec le passage du moteur en grande cylindrée mais on augmente rapidement le débit de fluide refoulé par la pompe (en particulier en augmentant sa cylindrée) pour commander le passage du moteur en grande cylindrée sans que celui-ci se traduise par une diminution trop brusque de la vitesse de rotation du moteur. A partir de cette situation, on diminue à nouveau régulièrement le débit de fluide refoulé par la pompe.

Généralement, on considère que, même si la courbe de décélération du véhicule n'est pas parfaitement lisse, le freinage est progressif si la décélération maximale reste de l'ordre de 5 m/s². On fait en sorte que la part de la décélération due au freinage hydrostatique reste compatible avec une telle pente de décélération.

Lorsque la situation de freinage normal est détectée, le système de freinage génère un freinage hydrostatique progressif, combiné avec le freinage par friction et convenablement dosé par rapport à lui. Lorsque, en revanche, une situation de freinage d'urgence est détectée, le freinage hydrostatique, qui est encore combiné avec le freinage par friction, se traduit d'abord par un freinage brusque, la diminution brusque du rapport précité générant une diminution brusque de la vitesse de rotation du moteur, puis par un freinage hydrostatique progressif. En cas de freinage d'urgence, le conducteur de l'engin ressent un à-coup, dû au freinage brusque, mais cet à-coup est parfaitement supportable car il est précisément lié au fait que le conducteur a déclenché un freinage d'urgence.

La diminution brusque du rapport entre le débit de fluide refoulé par la pompe et la cylindrée active du moteur peut être réalisée par une augmentation de la cylindrée active du moteur, en particulier lorsque celui-ci est à cylindrée continûment variable. On peut par exemple choisir de réaliser le freinage hydrostatique en augmentant la cylindrée du moteur dans une proportion de 10 à 20 % de la cylindrée active de ce moteur au moment du freinage, sous réserve que cette augmentation reste dans la limite de la cylindrée maximum du moteur.

En particulier lorsque la cylindrée du moteur varie par paliers, et selon le rapport entre ces paliers, il n'est pas toujours possible d'opérer le freinage hydrostatique brusque en augmentant la cylindrée du moteur.

Il est par conséquent avantageux que, en situation de freinage d'urgence, les moyens de gestion du freinage soient aptes à commander successivement une diminution brusque du débit de fluide refoulé par la pompe, puis un freinage hydrostatique progressif.

La détection de la situation de freinage d'urgence, ou de la situation de freinage normal, est liée au niveau d'actionnement des moyens d'actionnement du freinage. Par exemple, tant qu'un paramètre représentatif reste inférieur à une valeur déterminée, les moyens de gestion du freinage considèrent que la situation est celle d'un freinage normal tandis que, lorsque ce paramètre atteint ou dépasse cette valeur, c'est une situation de freinage d'urgence qui est détectée. Ce paramètre peut être la course d'enfoncement de la pédale de frein ou la pression dans le circuit de freinage. La valeur permettant de détecter la situation de freinage d'urgence peut être une valeur donnée ou une proportion d'une valeur maximale de ce paramètre (par exemple, 80 % de la course maximale de la pédale de frein ou de la pression maximale dans le circuit de freinage).

De préférence, en situation de freinage d'urgence, les moyens de gestion du freinage sont aptes, en fonction d'un paramètre représentatif de la vitesse du véhicule, de la cylindrée active de la pompe et de la cylindrée active du moteur, à commander successivement la diminution brusque du rapport entre le débit de fluide refoulé par la pompe et la cylindrée active du moteur et le freinage hydrostatique progressif.

Ce paramètre en fonction duquel ce freinage hydrostatique d'urgence est commandé est avantageusement le même que celui en fonction duquel le freinage hydrostatique progressif est commandé en situation de freinage normal.

Avantageusement, la diminution brusque du débit de fluide refoulé par la pompe est réalisée par une diminution brusque de la cylindrée de la pompe.

S'agissant d'une pompe à pistons axiaux, présentant un plateau came orientable, cette diminution brusque de la cylindrée de la pompe peut être obtenue en modifiant l'inclinaison de ce plateau came selon un angle convenable.

Avantageusement, la pompe est entraînée par un moteur annexe, en particulier un moteur thermique et les moyens de gestion du freinage sont aptes à commander une réduction de la vitesse d'entraînement dudit moteur thermique au moins au début d'une phase de freinage.

Comme on l'a indiqué précédemment, le freinage hydrostatique consiste à diminuer la vitesse de rotation du moteur hydraulique et à augmenter son couple grâce à une diminution du rapport entre le débit du fluide refoulé par la pompe et la cylindrée active du moteur. Même dans la situation de freinage normal, dans laquelle une diminution progressive de ce rapport est recherchée, une réduction de la vitesse du moteur thermique entraînant la pompe constitue un moyen avantageux pour diminuer ce rapport. Il peut bien entendu être combiné à une réduction de la cylindrée de la pompe et/ou à une augmentation de la cylindrée du moteur hydraulique.

Selon le délai de réponse du moteur annexe à une commande de réduction de sa vitesse, on peut envisager de commander une réduction de la vitesse de ce moteur, seule ou combinée à une diminution de la cylindrée de la pompe et/ou à une augmentation de la cylindrée active du moteur hydraulique, pour réaliser le freinage hydrostatique brusque.

Selon un exemple avantageux, la valeur de la diminution brusque de la cylindrée de la pompe est une proportion prédéterminée de la cylindrée active de la pompe au moment du freinage.

Selon le type d'engin, on peut calculer dans quelle proportion peut être diminuée la cylindrée active de la pompe pour réaliser la diminution brusque du débit de fluide qui est nécessaire à un arrêt convenable du véhicule en situation de freinage d'urgence, sans pour autant créer des à-coups insupportables pour le conducteur du véhicule. Par exemple, cette proportion peut être de l'ordre de 50 % lorsque, au moment du freinage, le moteur hydraulique fonctionne dans sa plus petite cylindrée active et de l'ordre de 10 % lorsque, au moment du freinage, ce moteur fonctionne dans sa plus grande cylindrée active. Si le moteur présente une ou plusieurs cylindrées intermédiaires entre ses deux cylindres extrêmes, la proportion de la diminution lorsque le moteur est dans une cylindrée intermédiaire peut être par exemple comprise entre 10 % et 50 %, sachant que, plus la cylindrée du moteur est élevée, plus le couple de freinage hydrostatique disponible est élevé et, par conséquent, plus l'impact de la diminution de la cylindrée de la pompe sur le freinage est grand.

De manière générale, lors du freinage hydrostatique progressif, on cherche à faire en sorte que la pente de la courbe de variation au cours du temps du rapport entre le débit de fluide refoulé par la pompe et la cylindrée active du moteur hydraulique n'excède pas une valeur déterminée, correspondant par exemple à une décélération du véhicule inférieure ou égale à 5 m/s². Lors du freinage hydrostatique brusque réalisé conformément à l'invention pour un freinage d'urgence, la variation brusque de ce rapport peut être définie par le fait que la pente de sa courbe de variation devient momentanément nettement supérieure à ladite valeur déterminée, par exemple en étant au moins égale à 5 fois ou 10 fois cette valeur, voire 20 fois supérieure ou plus.

En effet, compte tenu des délais de réponse et d'actionnement des moyens de commande des mécanismes concernés (de l'ordre du 1/10 de seconde), la diminution du rapport précité n'est pas instantanée.

Si le moteur présente plusieurs cylindrées actives de fonctionnement, il est avantageux que, lorsque le freinage est commandé alors que le moteur est dans une petite cylindrée active, les moyens de gestion du freinage soient aptes à commander le passage du moteur dans une plus grande cylindrée active lorsque la valeur de la cylindrée active de la pompe est inférieure ou égale à une valeur limite, puis à augmenter la valeur de ladite cylindrée active de la pompe jusqu'à une valeur déterminée en conséquence dudit passage du moteur dans ladite plus grande cylindrée active pour éviter que ce dernier ne génère une diminution brutale de la vitesse du moteur, et à diminuer progressivement la cylindrée de la pompe à partir de cette valeur déterminée.

Comme on l'a indiqué précédemment, il est avantageux de faire passer le moteur en grande cylindrée active pour réaliser un freinage efficace. Toutefois, ce passage en grande cylindrée active sans modification de la cylindrée de la pompe diminuerait de manière brutale la vitesse d'entraînement du moteur et causerait des à-coups de la vitesse du véhicule désagréables voire inacceptables. Avec la séquence précitée, si le freinage est commandé alors que la cylindrée de la pompe est supérieure à la valeur limite, on commence par diminuer cette cylindrée de la pompe pour l'amener à ladite valeur limite ou en dessous. Lorsque la valeur de la cylindrée active de la pompe l'autorise, on commande le passage du moteur en grande cylindrée active et on augmente la cylindrée active de la pompe de manière à augmenter momentanément le débit de fluide alimentant le moteur en fonction de l'augmentation de la cylindrée de ce dernier. On évite ainsi que la vitesse du moteur ne diminue trop brutalement.

Avantageusement, s'agissant d'un freinage hydrostatique progressif, en situation de freinage normal, les moyens de gestion du freinage sont aptes à maintenir la cylindrée de la pompe à une valeur donnée correspondant à l'autorisation du passage du moteur dans sa grande cylindrée active, pendant un laps de temps de stabilisation, avant de commander le passage du moteur dans sa grande cylindrée active.

Le laps de temps de stabilisation est généralement de l'ordre de 1/100 seconde à 1 seconde. Le maintien à cette valeur inchangée adoucit la décélération du véhicule pendant ce laps de temps, par rapport à la décélération qui était due auparavant à la diminution régulière de la cylindrée de la pompe jusqu'à atteindre ladite valeur limite. Après cette phase d'adoucissement, les moyens de gestion du freinage commandent l'augmentation rapide de la cylindrée de la pompe jusqu'à une nouvelle valeur en synchronisation avec le changement effectif de cylindrée du moteur (déplacement d'un tiroir de changement de cylindrée). Les commandes des changements de cylindrées de la pompe et du moteur sont émises simultanément ou de manière très légèrement décalée pour obtenir cette synchronisation malgré les temps d'actionnement éventuellement différents des moyens de changement de cylindrée de la pompe et du moteur. Les nouvelles cylindrées sont telles que la vitesse du moteur est sensiblement égale avant et après les changements de cylindrée.

Avantageusement, après ces changements de cylindrées, les moyens de gestion du freinage maintiennent brièvement (par exemple pendant 1/100 à 20/100 seconde) la cylindrée de la pompe à sa nouvelle valeur, avant de reprendre la diminution progressive de cette cylindrée.

Avantageusement, s'agissant d'un freinage d'urgence, les moyens de gestion sont aptes à diminuer ou sensiblement annuler le laps de temps de stabilisation avant de commander l'augmentation de cylindrée du moteur (l'étape d'adoucissement de la décélération est éliminée) et, éventuellement, à annuler également le maintien de la cylindrée de la pompe à sa nouvelle valeur.

Par exemple, dès que la cylindrée de la pompe atteint la valeur limite précitée, le passage du moteur en grande cylindrée est commandé, et l'augmentation de la cylindrée de la pompe est commandée sensiblement sans délai (ou avec un léger retard de l'ordre de 1/10 seconde pour synchroniser les changements effectifs de cylindrée de moteur et de la pompe malgré la différence entre les temps de réponse et d'actionnement des moyens de commande de ces changements de cylindrée). La diminution progressive de la cylindrée de la pompe reprend ensuite.

Avantageusement, les moyens de commande du freinage comprennent un organe de commande manoeuvrable et les moyens de freinage par friction comprennent au moins deux organes de freinage, respectivement solidaires en rotation du rotor et du stator du moteur et un vérin dont la partie mobile coopère avec l'un de ces organes pour le solliciter en contact de frottement avec l'autre organe en fonction de la pression de fluide dans le vérin, et les moyens pour détecter un niveau d'actionnement des moyens de commande sont aptes à détecter l'amplitude de manoeuvre dudit organe de commande ou la pression de fluide dans le vérin.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre un circuit hydraulique comprenant un système de freinage selon l'invention ;
- la figure 2 est un schéma synoptique présentant le fonctionnement du système de freinage selon l'invention ;
- la figure 3 montre un schéma synoptique selon une variante avantageuse ; et,
- la figure 4 montre des courbes présentant l'évolution de la pression de freinage et de la cylindrée de la pompe en fonction du temps lors d'une situation de freinage, cette figure présentant également, pour un engin dont les essieux avant et arrière sont entraînés par des moteurs à deux cylindrées, l'évolution des cylindrées de ces moteurs en fonction du temps.

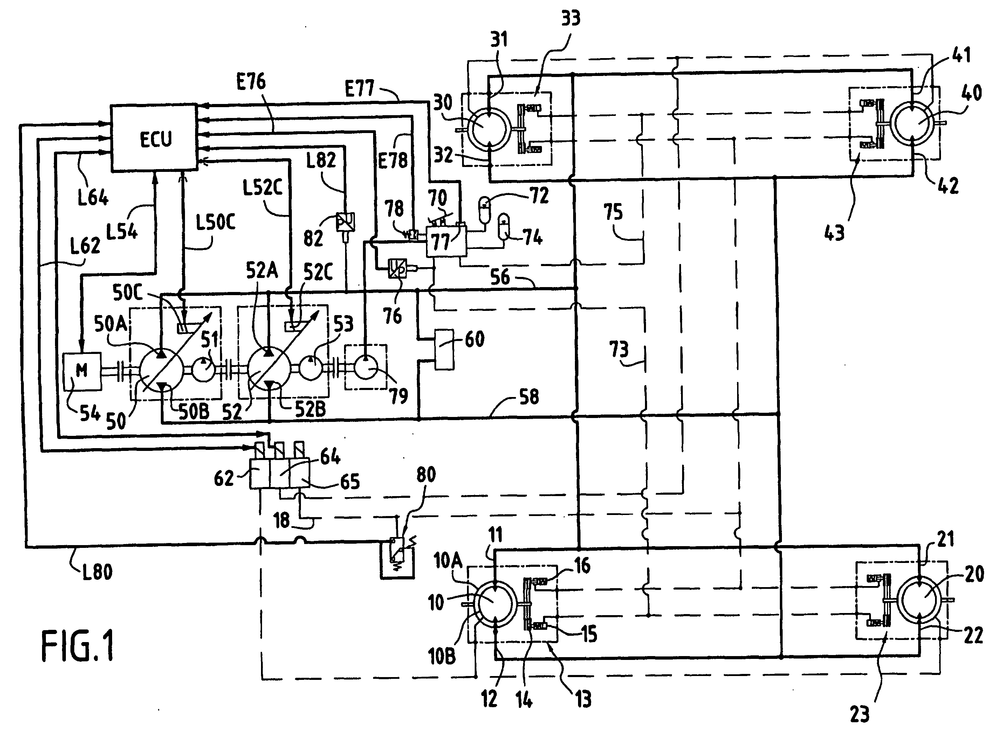

Le circuit de la figure 1 comporte deux moteurs 10, 20, pour entraîner l'essieu avant d'un engin et deux autres moteurs 30, 40 pour entraîner l'essieu arrière. Ces moteurs sont alimentés par des pompes. En l'espèce, deux pompes principales à cylindrée continûment variable, 50 et 52 sont entraînées par un moteur thermique 54 et sont disposées en parallèle. De manière connue en soi, chaque pompe principale est associée à une pompe de gavage, respectivement 51 et 53, servant à éviter la cavitation dans les conduites principales du circuit. Bien entendu, une seule pompe à cylindrée variable et une seule pompe de gavage pourraient suffire.

Pour simplifier, on a seulement représenté le raccordement des pompes principales avec ces conduites principales. Ainsi, les orifices 50A et 52A des pompes 50 et 52 sont raccordés à une première conduite principale 56 qui est elle-même raccordée à une première conduite principale de chaque moteur hydraulique, respectivement 11, 21, 31, 41. Les orifices 50B et 52B des pompes 50 et 52 sont reliés à une deuxième conduite principale 58 à laquelle sont reliées les deuxièmes conduites principales des moteurs, à savoir 12, 22, 32 et 42. De manière connue en soi, un bloc d'échange 60 est disposé entre les conduites principales 56 et 58 pour réaliser un échange thermique du fluide circulant dans le circuit, qui est un circuit fermé.

Dans l'exemple représenté, tous les moteurs du circuit présentent deux cylindrées actives de fonctionnement. On peut ainsi analyser le moteur 10 comme étant constitué de deux demi-moteurs, respectivement 10A et 10B, ces deux demi-moteurs étant actifs en grande cylindrée active du moteur du fait de leurs liaisons aux deux conduites principales 11 et 12, tandis que seul l'un d'entre eux, 10A ou 10B, est actif en petite cylindrée active du moteur 10, l'autre étant court-circuité.

Le circuit comporte des moyens de commande du changement de cylindrée des moteurs. Ces moyens comprennent par exemple, pour chaque moteur, un tiroir de changement de cylindrée intégré au moteur ou fixé sur son carter, ce tiroir étant déplacé pour relier les orifices de chaque demi-moteur aux conduites principales respectives ou pour les court-circuiter en mettant ces orifices à la même pression. Dans l'exemple représenté, le circuit comprend également des moyens pour commander ces moyens de changement de cylindrée simultanément pour les moteurs de chaque essieu. Ainsi, le circuit comprend une première électrovalve 62 qui sert à commander le changement de cylindrée des moteurs 10 et 20 du premier essieu, par exemple l'essieu avant, et une deuxième électrovalve 64 qui sert à commander le changement de cylindrée des moteurs 30 et 40 du deuxième essieu, par exemple l'essieu arrière. Les valves 62 et 64, de même que la valve 65 décrite ci-après, sont alimentées hydrauliquement par le circuit de gavage, non représenté.

Chaque moteur est associé à des moyens de freinage par friction, respectivement 13, 23, 33 et 43. Ces moyens de freinage par friction sont par exemple un frein à tambour ou un frein à disques multiples. C'est ce dernier cas qui est représenté, les disques 14 servant au freinage du moteur 10 comprenant une première série de disques solidaires du stator du moteur et une deuxième série de disques solidaires de son rotor. De manière générale, les moyens de freinage par friction comprennent au moins deux organes de freinage, respectivement solidaires en rotation du rotor et du stator du moteur. De plus, les moyens de freinage 13 comprennent un vérin dont la partie mobile coopère avec l'un de ces organes de freinage (avec un disque de l'une des séries précitées) pour le solliciter en contact de frottement avec l'autre organe (pour solliciter les disques des différentes séries en contact de frottement entre eux) en fonction de la pression de fluide dans ce vérin. En l'espèce, on a représenté, pour les moyens de freinage 13, un vérin 15 servant au freinage de service, car il peut être alimenté en fluide pour solliciter le contact de frottement précité, et un vérin 16 servant au défreinage du frein de stationnement ou de secours, car il peut être alimenté en fluide sous pression pour favoriser l'écartement de ces disques. En l'absence de fluide sous pression dans le vérin 16, le frein de stationnement ou de secours est actionné par des moyens de rappel élastique. Ceci est bien entendu un exemple de réalisation, favorisant la simplicité de la représentation du système de freinage et de ses moyens de commande. Les moyens de freinage par friction des moteurs 20 à 30 et 40 sont identiques à ceux du moteur 10 qui viennent d'être décrits.

Le vérin 16 peut être alimenté en fluide à partir d'une pompe annexe (de gavage par exemple), par une conduite de défreinage 18 reliée à une électrovalve 65, elle-même raccordée à la pompe annexe par une conduite non représentée.

Le système de freinage comporte des moyens de commande du freinage constitués, dans l'exemple représenté, par une pédale de freinage 70. Lorsque cette pédale est enfoncée, les vérins de freinage des moyens de freinage par friction 13, 23, 33 à 43 peuvent être alimentés en fluide. En effet, le système comprend un circuit de fluide de freinage ayant en l'espèce deux accumulateurs, 72 et 74, pouvant être alimentés en fluide de freinage par une pompe auxiliaire 79. Par exemple, les vérins de freinage des moyens de freinage 13 et 23 de l'essieu avant sont alimentés en fluide de freinage provenant de l'accumulateur 72, par une conduite d'alimentation en fluide de freinage 73, tandis que les vérins de freinage des moyens de freinage 33 et 43 de l'essieu arrière sont alimentés en fluide de freinage provenant de l'accumulateur 74, par la conduite d'alimentation en fluide de freinage 75.

Comme indiqué précédemment, le niveau d'actionnement des moyens de commande du freinage, en l'espèce la pédale, peut être indiqué par la course de cette pédale et/ou par la pression de fluide de freinage dans les conduites de freinage. Ainsi, le système représenté sur la figure 1 comprend un capteur de pression de freinage 76 qui, en l'espèce, mesure la pression de freinage dans la conduite d'alimentation en fluide de freinage 73. Il comprend également un capteur de fin de course 77 qui est activé lorsque la pédale 70 est actionnée de manière à parvenir en fin de course. Un capteur de pression 78 surveille la pression de fluide provenant des accumulateurs 72 et 74, disponible pour le freinage.

Une unité de commande ECU pourvue d'une capacité de mémoire et des moyens de calcul appropriés gère le freinage de manière à, en tenant compte du freinage réalisé par les moyens de freinage par friction des moteurs, contrôler le freinage hydrostatique. Pour connaître le niveau d'actionnement de la pédale de frein, l'unité de commande ECU est reliée aux capteurs 76 et 77, respectivement par des lignes d'entrée E76 et E77. Elle est également reliée au capteur 78 par une ligne E78, de manière à émettre une alarme si la pression disponible pour le freinage devient insuffisante.

L'unité ECU peut commander la variation des cylindrées actives des pompes 50 et 52. Le circuit comporte en effet des moyens, respectivement 50C et 52C pour faire varier la cylindrée des pompes 50 et 52, par exemple, s'agissant de pompes à pistons axiaux, pour faire varier l'inclinaison des plateaux-came de ces pompes. L'unité ECU est reliée à ces moyens de commande par des lignes, respectivement L50C et L52C. Comme l'indiquent les flèches représentées en trait plein sur ces lignes, l'unité ECU contrôle par ces lignes les moyens de commande 50C et 52C et connaît donc les cylindrées actives de ces pompes du fait de la commande qu'elle donne. Toutefois, comme indiqué par des flèches en trait interrompu sur les lignes L50C et L52C, elle peut également recevoir des informations sur la situation de ces moyens de commande 50C et 52C qui lui permettent de vérifier les cylindrées actives des pompes 50 et 52.

L'unité ECU est également liée au moteur thermique 54 par une ligne L54, qui lui permet de commander la vitesse de rotation de son moteur et, en retour, d'être informée de cette vitesse. Par des lignes L62 et L64, l'unité ECU est également liée aux moyens de commande 62 et 64 des moyens de changement de cylindrée des moteurs, de manière à pouvoir commander les changements de cylindrée et, en retour, à être informée de la situation de ces moyens de commande 62 et 64, de manière à connaître la cylindrée active des moteurs.

Connaissant la vitesse du moteur thermique 54, des cylindrées actives des pompes et celle des moteurs, ainsi que les développés des roues du véhicule, l'unité ECU peut connaître la vitesse d'avancement de ce véhicule.

L'unité de commande ECU peut être un micro-processeur comprenant notamment une zone mémoire paramétrable et des moyens de calcul lui permettant, à partir des données qu'elle reçoit par les différentes lignes qui viennent d'être décrites, de générer une consigne de commande des différents organes du système de freinage intervenant pour la réalisation du freinage hydrostatique.

L'unité ECU est en outre informée d'une situation de défreinage du frein de stationnement par une ligne L80 provenant d'un interrupteur 80. Pour commander ce défreinage, l'opérateur actionne une valve 65 qui permet l'alimentation de la conduite de défreinage 18 en fluide de défreinage. La pression dans cette conduite actionne l'interrupteur 80 qui envoie un signal à l'unité ECU.

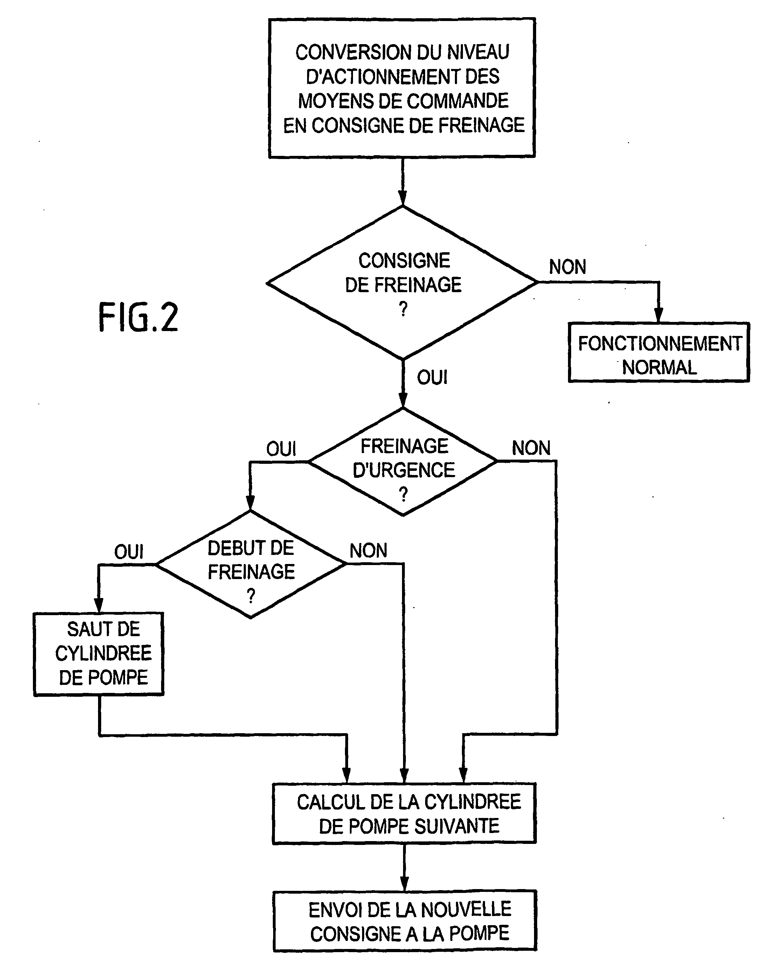

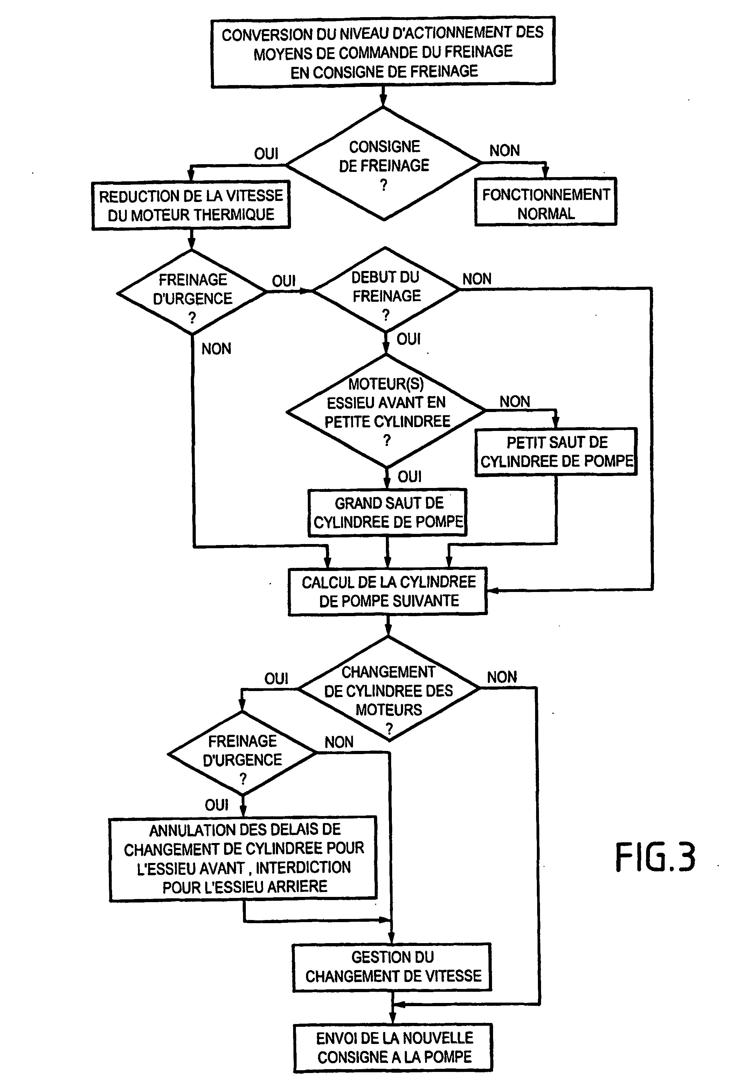

En référence aux figures 2 et 3, on décrit maintenant plus en détail le fonctionnement du système de freinage.

L'unité de commande ECU vérifie à chaque boucle le niveau d'actionnement de la pédale de frein dont elle est informée par les lignes E76 et E77. Si ce niveau ne traduit pas la volonté de freiner le véhicule, l'unité ECU n'émet aucune consigne de freinage et le moteur hydraulique fonctionne normalement.

Dans le cas contraire, l'unité ECU émet une consigne de freinage et le système entre dans la boucle de freinage.

Le freinage hydrostatique est commandé différemment selon que le niveau d'actionnement détecté est révélateur d'une situation de freinage normale ou, au contraire, une situation de freinage d'urgence. Comme indiqué précédemment, la course de la pédale de frein et/ou la pression de freinage peuvent traduire ce niveau d'actionnement.

Bien entendu, le seuil à partir duquel la situation de freinage d'urgence est détectée dépend du type de véhicule, en particulier de sa masse. Le capteur de fin de course 77 constitue un élément de sécurité en cas de défaillance du capteur proportionnel 76, pour déclencher une situation de freinage d'urgence.

Si le niveau d'actionnement des moyens de commande nécessite qu'une consigne de freinage soit établie, l'unité de commande ECU vérifie si l'on se trouve en situation de freinage d'urgence. Dans l'affirmative, elle vérifie si le pas de temps concerné par cette consigne est celui du début du freinage.

Si tel est le cas, conformément à l'invention, l'unité de commande ECU commande une diminution brusque du débit de fluide refoulé par la pompe. Dans l'exemple représenté, cette diminution brusque est opérée par un saut de cylindrée de la pompe, diminuant cette cylindrée. Comme indiqué précédemment, ce saut peut être une proportion prédéterminée de la cylindrée active de la pompe au moment du freinage. Cette proportion est prédéterminée en fonction du véhicule équipé du système de freinage, de telle sorte que l'à-coup de réduction de vitesse qui en résulte soit suffisant pour le freinage d'urgence, en restant acceptable.

La cylindrée de pompe suivante est calculée en fonction de ce saut. En fonction de ce calcul, une nouvelle consigne est envoyée aux moyens de commande de la cylindrée de la pompe. La cylindrée de la pompe peut ainsi être modifiée à chaque pas de temps. Par exemple, la durée d'un pas de temps est de l'ordre de 50 ms. Au pas de temps suivant, le système se trouve toujours en situation de freinage d'urgence mais il ne s'agit plus du début du freinage. Par conséquent, l'unité de commande ECU calcule la cylindrée de pompe suivante de manière à respecter une décélération jugée convenable. Par exemple, on considère que la décélération maximale doit être de l'ordre de 5 m/s². Après le saut de cylindrée opéré au premier pas de temps, le freinage hydrostatique est progressif pour les itérations suivantes.

Lorsque la situation n'est pas celle d'un freinage d'urgence, mais celle d'un freinage normal, l'unité de commande calcule la nouvelle cylindrée de pompe dès le premier pas de temps de manière à respecter une décélération progressive, par exemple restant plafonnée à 5 m/s².

On décrit maintenant la figure 3 qui illustre le fonctionnement du système de freinage selon une variante.

Lorsque le niveau d'actionnement des moyens de commande du freinage est tel qu'une consigne de freinage est établie, l'unité de commande peut, en entrant dans la boucle de freinage, commander une réduction de vitesse du moteur thermique 54. La valeur de cette réduction peut être une proportion de la vitesse du moteur thermique 54 au moment de la commande du freinage. Elle permet de limiter le débit de fluide refoulé par la pompe sans générer d'à-coup violent, compte tenu du temps de réaction du moteur thermique à une consigne de réduction de sa vitesse.

Cette réduction peut être recommandée indépendamment de ce que la situation est celle d'un freinage d'urgence ou d'un freinage normal. Par exemple, la réduction de la vitesse du moteur thermique devant être appliquée peut être commandée sur la base d'un tableau de correspondance entre, d'une part, la vitesse du moteur thermique et, d'autre part, le rapport entre la cylindrée de la pompe et la cylindrée active du moteur.

Lorsque le circuit comprend plusieurs moteurs, ce que l'on nomme dans le présent texte la cylindrée active du moteur est en réalité l'ensemble des cylindrées actives des moteurs considérés (par exemple sur un essieu), reliées à l'une des conduites de refoulement de la pompe.

La variante de la figure 3 concerne un circuit du type de celui de la figure 1, dans lequel les deux essieux du véhicule sont moteurs, leurs moteurs respectifs ayant plusieurs cylindrées actives de fonctionnement. Lorsque l'on se trouve en situation de freinage d'urgence et au début du freinage, c'est-à-dire lorsqu'il s'agit du premier pas de temps de la gestion du freinage d'urgence opérée par l'unité de commande ECU, cette dernière vérifie tout d'abord si le ou les moteurs de l'essieu du véhicule affecté principalement par le freinage se trouvent en petite cylindrée. En général, compte tenu des reports de charge qui s'opèrent dans le véhicule lors de son freinage, cet essieu est l'essieu avant.

Si ce ou ces moteurs se trouvent en petite cylindrée, l'unité de commande ECU commande un grand saut de cylindrée de pompe. Si ce n'est pas le cas, elle commande seulement un petit saut de cylindrée de pompe.

On a utilisé ces deux expressions de grand saut et petit saut pour distinguer les situations. En effet, lorsqu'un moteur se trouve en petite cylindrée, le couple de freinage hydrostatique généré est moins important que lorsqu'il se trouve en grande cylindrée. Par conséquent, lorsque ce moteur se trouve en petite cylindrée, une même réduction de la cylindrée de la pompe alimentant ce moteur se traduit par un à-coup dans l'avancement du véhicule entraîné par ledit moteur beaucoup moins violent que lorsque ce moteur se trouve en grande cylindrée. Par exemple, selon le type de véhicule, le grand saut de cylindrée de la pompe, autorisé lorsque le moteur se trouve en petite cylindrée, peut être de l'ordre de 50 % de la cylindrée de la pompe constatée au moment du freinage. Le petit saut de cylindrée de pompe est généralement inférieur à ce grand saut de cylindrée, et peut être nul ou quasi nul, ou bien limité à une proportion, par exemple de l'ordre de 10 %, de la cylindrée active de la pompe au moment du freinage. En fonction du saut de cylindrée de pompe devant être appliqué, l'unité de commande calcule la cylindrée de pompe suivante, à partir de laquelle doit être élaborée la nouvelle consigne, pour commander le changement de cylindrée de la pompe. Bien entendu, si les moteurs présentent une ou plusieurs cylindrées actives intermédiaires entre leur plus petite et leur plus grande cylindrée, on peut concevoir un saut intermédiaire de cylindrée de pompe pour chacune de ces cylindrées intermédiaires.

Connaissant la cylindrée actuelle de la pompe, l'unité de commande ECU vérifie si le changement de cylindrée du moteur est possible ou opportun. Bien entendu, si tous les moteurs se trouvent en grande cylindrée, ce changement n'est pas nécessaire. Si un moteur se trouve en petite cylindrée, il importe de vérifier si son changement de cylindrée est possible. En effet, comme indiqué précédemment, le passage brutal d'un moteur de sa petite cylindrée à sa grande cylindrée génère un à-coup brutal de fonctionnement.

Lors d'un freinage hydrostatique progressif, on n'augmente la cylindrée d'un moteur que lorsque la cylindrée de la pompe alimentant ce moteur a été suffisamment diminuée pour, dès l'augmentation de la cylindrée du moteur, pouvoir être augmentée de manière à momentanément délivrer un débit de fluide suffisant pour entraîner la rotation du moteur dont la cylindrée vient d'augmenter brutalement à une vitesse voisine de celle qu'avait ce moteur juste avant l'augmentation de sa cylindrée. Schématiquement, si la grande cylindrée est égale au double de la petite cylindrée, le passage de la petite à la grande cylindrée n'est possible que si la cylindrée de la pompe est tout au plus égale à la moitié de la valeur maximale de cylindrée de la pompe, ce qui permet de momentanément doubler la cylindrée de la pompe pour compenser l'augmentation brutale de cylindrée du moteur.

Lorsque les paramètres fournis à l'unité de commande traduisent la possibilité d'un changement de cylindrée des moteurs, cette unité vérifie si la situation est celle d'un freinage d'urgence ou pas. Dans l'affirmative, comme indiqué précédemment, il est avantageux que l'unité de commande génère un ordre annulant les délais de changement de cylindrée pour l'essieu affecté principalement par le freinage, en l'espèce l'essieu avant, et, simultanément, interdise le changement de cylindrée pour les moteurs de l'essieu arrière. Cet ordre d'annulation des délais correspond à l'annulation de l'étape d'adoucissement du ralentissement décrite précédemment.

De préférence, le changement de cylindrée du moteur ne concerne que celui ou ceux qui entraînent l'essieu avant du véhicule. Il est en effet nécessaire de freiner de manière préférentielle les roues de cet essieu, affecté en premier lieu par le freinage. En revanche, il est souhaitable d'interdire au moins momentanément l'augmentation de la cylindrée du ou des moteurs de l'essieu arrière. Ceci permet de limiter l'effort de freinage sur les roues arrière car, lors d'un freinage brutal, elles sont délestées d'une grande partie de leur charge par le report de charge sur l'essieu avant, et d'éviter ainsi le blocage de ces roues. Ceci permet également, si les moteurs des roues arrière ne sont pas équipés de freins à friction, d'éviter la rotation inversée de ces roues arrière.

Cette commande étant effectuée, l'unité de commande gère le changement de vitesse du ou des moteurs concernés en augmentant leur cylindrée et en augmentant momentanément la cylindrée de la ou des pompes servant à les alimenter. Ce changement de vitesse est géré de manière classique de telle sorte que l'augmentation de la cylindrée de la pompe permette que le moteur ait dans sa grande cylindrée une vitesse sensiblement égale à celle qu'il avait dans sa petite cylindrée, ou bien légèrement inférieure, tout en restant dans une plage de décélération maximale tolérée dans cette phase du freinage, par exemple de l'ordre de 5 m/s².

On considère par exemple que les moteurs de l'essieu avant sont en petite cylindrée et que leur grande cylindrée est égale au double de leur petite cylindrée. Dans ce cas, la cylindrée de la pompe calculée lors de l'étape de gestion du changement de vitesse pourra être égale au double de la cylindrée calculée avant la décision du changement de cylindrée des moteurs. C'est sur la base de la cylindrée calculée dans la gestion du changement de vitesse que sera établie la nouvelle consigne à envoyer à la pompe pour fixer sa cylindrée au pas de temps suivant.

Si le changement de cylindrée des moteurs s'avère impossible ou inopportun, la cylindrée calculée avant la vérification de l'opportunité du changement de cylindrée des moteurs sert à l'établissement de la nouvelle consigne.

Avantageusement, l'unité de commande ECU commande le passage d'un moteur dans sa plus grande cylindrée active après la diminution brusque du débit de fluide refoulé par la pompe. En pratique, si l'on se reporte à la figure 3, l'unité de commande détermine par exemple un grand saut de cylindrée de pompe, servant au calcul de la cylindrée de pompe suivante. L'unité de commande peut être programmée pour que le test de l'opportunité de changement de cylindrée des moteurs soit systématiquement négatif lors du premier pas de temps d'une procédure de freinage d'urgence.

Avantageusement, le système de freinage comporte des moyens pour déterminer la pression de fluide dans une conduite d'alimentation du moteur hydraulique qui est à la haute pression en phase de freinage et cette pression de fluide est prise en compte dans la détermination de la consigne utilisée par les moyens de gestion du freinage pour commander le freinage hydrostatique.

Ainsi, la figure 1 montre qu'un capteur de pression 82 détecte la pression dans la conduite principale 56 et donc dans les conduites 11, 21, 31 et 41 des moteurs.

L'information de la pression détectée est transmise à l'unité de commande ECU par une ligne L82. La conduite 56 est celle qui, lorsque le véhicule circule en marche avant, est reliée à celle des conduites d'alimentation de chaque moteur qui est à la haute pression lors d'un freinage hydrostatique. En général, cette conduite d'alimentation est celle qui sert au retour de fluide en marche avant.

La prise en compte de cette pression permet par exemple de déterminer un couple de freinage hydrostatique maximal en faisant varier la cylindrée de la pompe de telle sorte que la pression dans cette conduite d'alimentation à haute pression reste maximale. Selon les cas, on peut en revanche souhaiter obtenir un couple de freinage constant qui nécessite de prendre en compte la variation de pression dans cette conduite. Connaissant la pression de cette conduite, on peut encore chercher à obtenir une répartition prédéterminée entre le couple de freinage hydrostatique et le couple de freinage par friction. Par exemple, on peut faire en sorte que ces deux couples soient égaux et contribuent donc chacun pour moitié au freinage.

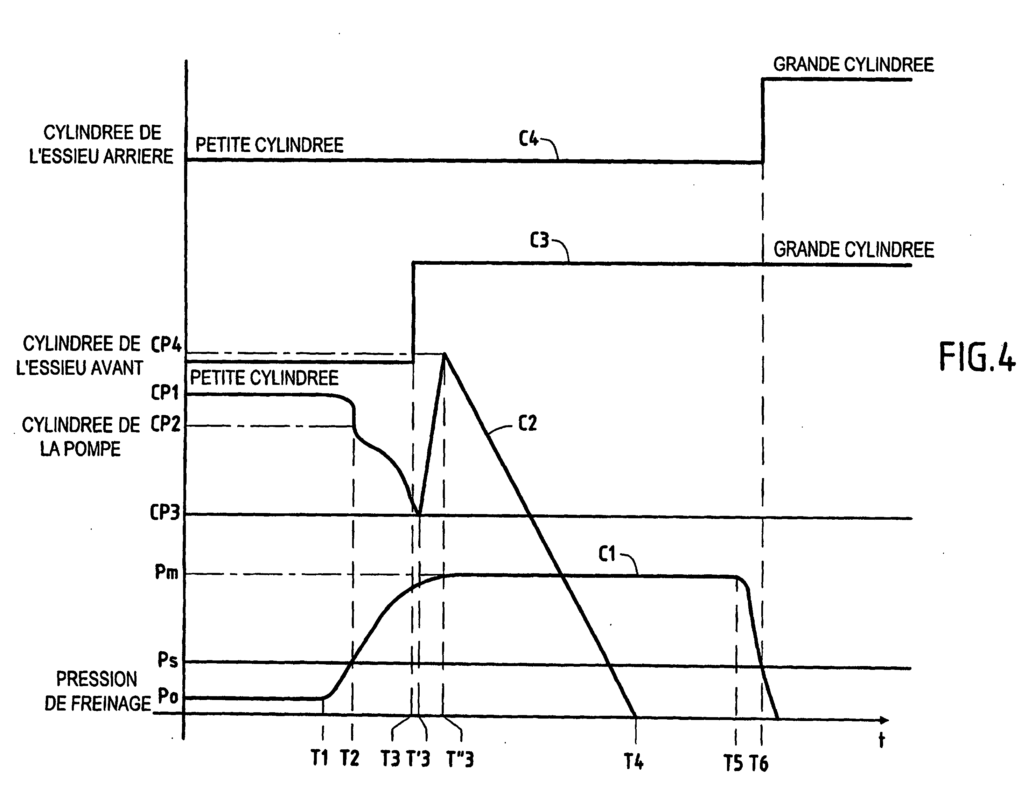

La figure 4 permet de bien comprendre la mise en oeuvre du freinage d'urgence. Les courbes C1, C2, C3 et C4 montrent respectivement l'évolution de la pression de freinage, celle de la cylindrée de la pompe, celle de la cylindrée du ou des moteurs de l'essieu avant et celle de la cylindrée du ou des moteurs de l'essieu arrière en fonction du temps.

Ce graphique ne porte pas d'unité, car il s'agit principalement de comparer les évolutions en fonction du temps, figurant en abscisse, de la pression de freinage et des cylindrées figurant en ordonnée.

On considère que le système de freinage s'applique à un véhicule dont les deux essieux sont motorisés par des moteurs différents, ce véhicule pouvant comporter un seul moteur par essieu ou un moteur par roue. C'est pourquoi, de manière générale, on évoque la cylindrée de l'essieu arrière et la cylindrée de l'essieu avant, qui correspondent aux cylindrées du ou des moteurs de ces essieux.

En situation de fonctionnement normal du véhicule, aucun freinage n'est commandé, et la pression de freinage reste à sa valeur seuil d'attente Po. Au temps T1, le conducteur appuie sur la pédale de frein de manière à commander un freinage. La pression de freinage augmente brutalement et, dès lors qu'elle dépasse une valeur Ps correspondant au seuil de freinage d'urgence, une situation de freinage d'urgence est détectée. Ainsi, la situation de freinage d'urgence est détectée au temps T2.

A ce moment, l'unité de commande ECU commande une diminution brusque de la cylindrée de la pompe. Celle-ci passe ainsi en un laps de temps très court à une valeur diminuée brutalement CP2. Le véhicule se déplaçant initialement à une vitesse constante sur un terrain plat, la cylindrée de la pompe était égale à CP1. Lorsque le freinage a été commandé, au temps T1, il s'agissait d'abord d'une situation de freinage normal et l'unité de commande a pu, entre les temps T1 et T2, commander un freinage hydrostatique progressif en faisant légèrement diminuer la cylindrée de la pompe comme on le voit sur la figure 4. C'est seulement lorsque la situation de freinage d'urgence a été détectée, au temps T2, que la cylindrée de la pompe a diminué brutalement pour passer à sa valeur CP2. A partir de cette situation, la cylindrée de la pompe diminue régulièrement de telle sorte que la décélération du véhicule corresponde à la décélération maximale souhaitée. Cette diminution a sur la figure 4 une pente quasiment constante.

Dans l'exemple de la figure 4, on considère que les moteurs des essieux avant et arrière étaient initialement en petite cylindrée active de fonctionnement. Lorsque la cylindrée de la pompe a suffisamment diminué pour atteindre une valeur CP3 correspondant au seuil de passage des moteurs de l'essieu avant en grande cylindrée, ce seuil étant défini comme indiqué précédemment, le ou les moteurs de l'essieu avant sont commandés de manière à passer en grande cylindrée, au temps T3. Comme indiqué précédemment, le délai de changement de cylindrée des moteurs de l'essieu avant a été annulé en situation de freinage d'urgence. Il en résulte que le passage de ce moteur en grande cylindrée s'opère très légèrement avant que la cylindrée de la pompe ne commence à augmenter, au temps T'3. Cette augmentation est moins rapide que celle de la cylindrée des moteurs, et la cylindrée CP4 souhaitée pour la pompe est atteinte au temps T"3. Il en résulte un à-coup dans le freinage du véhicule, mais celui-ci est acceptable s'agissant d'une situation de freinage d'urgence. Entre les temps T'3 et T"3, la cylindrée de la pompe est donc augmentée jusqu'à atteindre une valeur CP4 permettant que le ou les moteurs de l'essieu avant, maintenant en grande cylindrée, aient une vitesse égale ou légèrement inférieure à celle qu'ils avaient avant le changement de cylindrée de la pompe. A partir de cette valeur CP4, la diminution de cylindrée de la pompe reprend de manière régulière jusqu'à devenir nulle au temps T4 auquel le véhicule s'arrête.

Il convient de relever que, pour les raisons indiquées précédemment, seule la cylindrée du ou des moteurs de l'essieu avant a été augmentée, celle du ou des moteurs de l'essieu arrière étant restée fixée à la petite cylindrée. S'agissant d'un freinage d'urgence, la pression de freinage atteint rapidement sa valeur maximale Pm, permettant une sollicitation maximale des moyens de freinage par friction. Le véhicule s'arrête au temps T4 et le conducteur relâche la pédale de frein au temps T5, à partir duquel la pression de freinage diminue rapidement. Quand cette pression devient suffisamment faible, au temps T6, le ou les moteurs de l'essieu arrière peuvent à leur tour passer en grande cylindrée, de manière que le moteur soit en grande cylindrée pour pouvoir fournir un couple maximum au démarrage qui suivra.

Bien que les figures qui ont été décrites se rapportent au cas d'un véhicule dont les deux essieux sont motorisés, avec de surcroît des moteurs ayant plusieurs cylindrées actives, il doit être entendu que invention s'applique également aux systèmes de freinage de véhicules dont seul un essieu est motorisé, éventuellement avec des moteurs ayant une seule cylindrée.

L'invention s'applique en particulier mais non exclusivement aux transmissions hydrostatiques utilisant des moteurs hydrauliques lents à fort couple, du type à pistons radiaux ou du type à engrenages internes (gérotors), à une ou plusieurs cylindrées, pour entraîner les roues avant et/ou arrière d'un véhicule.

## Revendications

1. Système de freinage pour un véhicule entraîné par au moins un moteur hydraulique (10, 20, 30, 40) alimenté en circuit fermé par au moins une pompe (50, 52) à cylindrée variable, le système comprenant des moyens de freinage par friction (13, 23, 33, 43) du moteur, des moyens de commande du freinage (70), des moyens (76, 77) pour déterminer un niveau d'actionnement desdits moyens de commande et pour détecter une situation de freinage d'urgence ou une situation de freinage normal en fonction du niveau d'actionnement des moyens de commande du freinage (70) et des moyens de gestion du freinage aptes, en situation de freinage normal, à commander un freinage hydrostatique progressif, et en situation de freinage d'urgence, un freinage hydrostatique brusque,
**caractérisé en ce que** les moyens de commande du freinage sont aptes à commander le freinage par friction et le freinage hydrostatique, ces freinages étant combinés et **en ce que**, en situation de freinage normal, les moyens de gestion du freinage (ECU) sont aptes à commander le freinage hydrostatique progressif en provoquant une diminution progressive du rapport entre le débit de fluide refoulé par la pompe (50, 52) et la cylindrée active du moteur (10, 20, 30, 40), selon une consigne déterminée en fonction du niveau d'actionnement des moyens de commande du freinage (70), d'un paramètre représentatif de la vitesse du véhicule, de la cylindrée active de la pompe et de la cylindrée active du moteur, tandis que, en situation de freinage d'urgence, lesdits moyens de gestion sont aptes à commander successivement une diminution brusque du rapport entre le débit de fluide refoulé par la pompe et la cylindrée active du moteur, puis un freinage hydrostatique progressif.

2. Système selon la revendication 1, **caractérisé en ce que**, en situation de freinage d'urgence, les moyens de gestion du freinage (ECU) sont aptes, en fonction d'un paramètre représentatif de la vitesse du véhicule, de la cylindrée active de la pompe et de la cylindrée active du moteur, à commander successivement la diminution brusque du rapport entre le débit de fluide refoulé par la pompe et la cylindrée active du moteur et le freinage hydrostatique progressif.

3. Système selon la revendication 1 ou 2, **caractérisé en ce que**, en situation de freinage d'urgence, les moyens de gestion du freinage sont aptes à commander successivement une diminution brusque du débit de fluide refoulé par la pompe, puis un freinage hydrostatique progressif.

4. Système selon la revendication 3, **caractérisé en ce que** la diminution brusque du débit de fluide refoulé par la pompe (50, 52) est réalisée par une diminution brusque de la cylindrée de la pompe.

5. Système selon la revendication 4, **caractérisé en ce que** la valeur de la diminution brusque de la cylindrée de la pompe (50, 52) est une proportion prédéterminée de la cylindrée active de la pompe au moment du freinage.

6. Système selon l'une quelconque des revendications 1 à 5, dans lequel le moteur (10, 20, 30, 40) présente plusieurs cylindrées actives de fonctionnement (10A, 10B, 20A, 20B, 30A, 30B, 40A, 40B), **caractérisé en ce que**, lorsque le freinage est commandé alors que le moteur est dans une petite cylindrée active, les moyens (ECU) de gestion du freinage sont aptes à commander le passage du moteur dans une plus grande cylindrée active lorsque la valeur de la cylindrée active de la pompe est inférieure ou égale à une valeur limite (CP3), puis à augmenter la valeur de ladite cylindrée active de la pompe jusqu'à une valeur (CP4) déterminée en conséquence dudit passage du moteur dans ladite plus grande cylindrée active pour éviter que ce dernier ne génère une diminution brutale de la vitesse du moteur, et à diminuer progressivement la cylindrée de la pompe à partir de cette valeur déterminée.

7. Système selon la revendication 6, **caractérisé en ce que**, dans la situation de freinage d'urgence, les moyens (ECU) de gestion du freinage sont aptes à commander ledit passage du moteur dans ladite plus grande cylindrée active, après ladite diminution brusque du débit de fluide refoulé par la pompe.

8. Système selon la revendication 6 ou 7, **caractérisé en ce que**, en situation de freinage normal, les moyens (ECU) de gestion du freinage sont aptes à maintenir la cylindrée de la pompe (50, 52) à une valeur donnée correspondant à l'autorisation du passage du moteur dans sa grande cylindrée active, pendant un laps de temps de stabilisation avant de commander le passage du moteur dans sa grande cylindrée active, tandis que, en situation de freinage d'urgence, lesdits moyens de gestion du freinage sont aptes à diminuer ou sensiblement annuler ledit laps de temps de stabilisation.

9. Système selon l'une quelconque des revendications 6 à 8, pour un véhicule qui comporte plusieurs organes de déplacement, disposés les uns à la suite des autres dans le sens de déplacement de ce véhicule et entraînés par des moteurs différents, **caractérisé en ce que** les moyens (ECU) de gestion du freinage sont aptes à commander le passage dans la plus grande cylindrée active du ou des moteurs hydrauliques (10, 20) qui entraînent le ou les organes de déplacement avant au moment du freinage, sans modifier la cylindrée active du ou des moteurs (30, 40) qui entraînent le ou les autres organes de déplacement.

10. Système selon l'une quelconque des revendications 1 à 9, **caractérisé en ce que**, la pompe (50, 52) étant entraînée par un moteur annexe (54), en particulier un moteur thermique, les moyens de gestion du freinage sont aptes à commander une réduction de la vitesse d'entraînement dudit moteur thermique au moins au début d'une phase de freinage.

11. Système selon l'une quelconque des revendications 1 à 10, **caractérisé en ce que** les moyens de commande du freinage comprennent un organe de commande manoeuvrable (70) et les moyens de freinage par friction (13, 23, 33, 43) comprennent au moins deux organes de freinage (14), respectivement solidaires en rotation du rotor et du stator du moteur et un vérin (15) dont la partie mobile coopère avec l'un de ces organes pour le solliciter en contact de frottement avec l'autre organe en fonction de la pression de fluide dans le vérin et **en ce que** les moyens (76, 77) pour détecter un niveau d'actionnement des moyens de commande sont aptes à détecter l'amplitude de manoeuvre dudit organe de commande ou la pression de fluide dans le vérin.

12. Système selon l'une quelconque des revendications 1 à 11, **caractérisé en ce qu'**il comporte des moyens (82) pour déterminer la pression de fluide dans une conduite d'alimentation du moteur hydraulique qui est à la haute pression en phase de freinage et **en ce que** ladite pression de fluide est prise en compte dans la détermination de la consigne utilisée par les moyens de gestion du freinage pour commander le freinage hydrostatique.

## Patentansprüche

1. Bremssystem für ein Fahrzeug, das von wenigstens einem Hydraulikmotor (10, 20, 30, 40) angetrieben wird, der von einem geschlossenen Kreislauf durch wenigstens eine Pumpe (50, 52) mit variablen Hubraum gespeist wird, wobei das System Mittel zum Bremsen des Motors durch Reibung (13, 23, 33, 43), Bremsreglermittel (70), Mittel (76, 77) zum Bestimmen eines Betätigungsniveaus der Reglermittel und zum Detektieren einer Notbremssituation oder einer normalen Bremssituation als Funktion des Betätigungsniveaus der Bremsreglermittel (70), und Bremssteuermittel umfaßt, die geeignet sind, in einer normalen Bremssituation ein progressives hydrostatisches Bremsen zu steuern und in einer Notbremssituation ein abruptes hydrostatisches Bremsen,
**dadurch gekennzeichnet,**
**daß** die Bremsreglermittel geeignet sind, das Bremsen durch Reibung und das hydrostatische Bremsen zu steuern, wobei diese Bremsungen kombiniert werden, und dadurch,
**daß** bei Normalbremssituation die Bremssteuermittel (ECU) geeignet sind, das progressive hydrostatische Bremsen unter Hervorrufen einer progressiven Verminderung des Verhältnisses zwischen dem Fluidbefüllungsdurchsatz durch die Pumpe (50, 52) und dem aktiven Hubraum des Motors (10, 20, 30, 40) gemäß einer Vorgabe zu steuern, die in Abhängigkeit des Betätigungsniveaus der Bremsreglermittel (70), eines für die Geschwindigkeit des Fahrzeugs repräsentativen Parameters, des aktiven Hubraums der Pumpe und des aktiven Hubraums des Motors bestimmt ist, während bei Notbremssituation die Steuermittel geeignet sind, um aufeinanderfolgend eine abrupte Verminderung des Verhältnisses zwischen dem Fluidbefüllungsdurchsatz durch die Pumpe und dem aktiven Hubraum des Motors und dann ein progressives hydrostatisches Bremsen zu steuern.

2. System nach Anspruch 1, **dadurch gekennzeichnet, daß** bei
Notfallbremssituation, die Bremssteuermittel (ECU) in Abhängigkeit eines für die Geschwindigkeit des Fahrzeugs repräsentativen Parameters, des aktiven Hubraums der Pumpe und des aktiven Hubraums des Motors geeignet sind, aufeinanderfolgend die abrupte Verminderung des Verhältnisses zwischen dem Fluidbefüllungsdurchsatz durch die Pumpe und dem aktiven Hubraum des Motors und das hydrostatische progressive Bremsen zu steuern.

3. System nach Anspruch 1 oder 2, **dadurch gekennzeichnet, daß** bei Notbremssituation die Bremssteuermittel geeignet sind, aufeinanderfolgend eine abrupte Verminderung des Fluidbefüllungsdurchsatzes durch die Pumpe und dann ein progressives hydrostatisches Bremsen zu steuern.

4. System nach Anspruch 3, **dadurch gekennzeichnet, daß** die abrupte Verminderung des Fluidbefüllungsdurchsatzes durch die Pumpe (50, 52) durch eine abrupte Verminderung des Hubraums der Pumpe realisiert wird.

5. System nach Anspruch 4, **dadurch gekennzeichnet, daß** der Wert der abrupten Verminderung des Pumpzylinderhubraums (50, 52) ein vorbestimmter Anteil des aktiven Hubraums der Pumpe im Moment des Bremsens ist.

6. System nach einem der Ansprüche 1 bis 5, bei dem der Motor (10, 20, 30, 40) mehrere aktive Hubräume (10A, 10B, 20A, 20B, 30A, 30B, 40A, 40B) aufweist, **dadurch gekennzeichnet, daß** wenn das Bremsen gesteuert wird während der Motor in einem kleinen aktiven Hubraum ist, die Bremssteuermittel (ECU) geeignet sind, den Übergang des Motors in einen größeren aktiven Hubraum zu steuern, während der Wert des aktiven Hubraums der Pumpe kleiner oder gleich einem Grenzwert (CP3) ist, und dann den Wert des aktiven Hubraums der Pumpe bis auf einen Wert (CP4) anzuheben, der infolge des Übergangs des Motors in einen größeren aktiven Hubraum vorgegeben ist, um zu vermeiden, daß letzterer keine drastische Verminderung der Geschwindigkeit des Motors erzeugt und progressiv den Pumphubraum von diesem vorbestimmten Wert aus zu vermindern.

7. System nach Anspruch 6, **dadurch gekennzeichnet, daß** bei Notbremssituation die Bremssteuermittel (ECU) geeignet sind, den Übergang des Motors in den größten aktiven Hubraum zu steuern, nach der abrupten Verminderung des Fluidbefüllungsdurchsatzes durch die Pumpe.

8. System nach Anspruch 6 oder 7, **dadurch gekennzeichnet, daß** bei Normalbremssituation die Bremssteuermittel (ECU) geeignet sind, den Hubraum der Pumpe (50, 52) auf einem vorgegebenen Wert zu halten, der dem Zulassen des Übergangs des Motors in seinen großen aktiven Hubraum entspricht während eines Stabilisierungszeitfensters, bevor der Übergang des Motors in seinen großen aktiven Hubraum gesteuert wird, während bei Notfallbremssituation die Bremssteuermittel geeignet sind, die Stabilisierungszeitfenster zu vermindern oder im wesentlichen zu entfernen.

9. System nach einem der Ansprüche 6 bis 8 für ein Fahrzeug, das mehrere Bewegungsorgane umfaßt, die hintereinander in Bewegungsrichtung dieses Fahrzeugs angeordnet sind und durch unterschiedliche Motoren angetrieben werden, **dadurch gekennzeichnet, daß** die Bremssteuermittel (ECU) geeignet sind, den Übergang in den größten aktiven Hubraum des oder der hydraulischen Motors/Motoren (10, 20) zu steuern, die das oder die Bewegungsorgan/e antreiben vor dem Bremszeitpunkt, ohne den aktiven Hubraum des oder der Motors/Motoren (30, 40) zu modifizieren, die das oder die anderen Bewegungsorgan/e antreiben.

10. System nach einem der Ansprüche 1 bis 9, **dadurch gekennzeichnet, daß** die Pumpe (50, 52) durch einen angebauten Motor (54), insbesondere einen Verbrennungsmotor, angetrieben werden, wobei die Bremssteuermittel geeignet sind, eine Verminderung der Antriebsgeschwindigkeit des Verbrennungsmotors wenigstens am Anfang der Bremsphase zu steuern.

11. System nach einem der Ansprüche 1 bis 10, **dadurch gekennzeichnet, daß** die Bremsreglermittel ein betätigbares Steuerorgan (70) und Bremsmittel durch Reibung (13, 23, 33, 43) umfassen, welche wenigstens zwei Bremsorgane (14) umfassen, die jeweils rotationsfest mit dem Rotor und Stator des Motors und einem Stellglied (15) sind, dessen beweglicher Teil mit einem dieser Organe zusammenwirkt, um ihn in Reibungskontakt mit dem anderen Organ in Abhängigkeit des Fluiddruckes in dem Stellglied zu verfestigen und **dadurch**, daß die Mittel (76, 77) zur Detektion des Betätigungsniveaus der Reglermittel geeignet sind, die Betätigungsamplitude des Steuerorgans oder den Fluiddruck in des Stellglieds zu detektieren.

12. System nach einem der Ansprüche 1 bis 11, **dadurch gekennzeichnet, daß** es Mittel (82) zum Bestimmen des Fluiddrucks in einer Zufuhrleitung des in der Bremsphase unter hohem Druck stehenden Hydraulikmotors umfaßt, und **dadurch**, daß der Fluiddruck bei der Bestimmung der Vorgabe berücksichtigt wird, die durch die Bremssteuermittel verwendet wird, um das hydrostatische Bremsen zu steuern.

## Claims

1. A brake system for a vehicle driven by at least one hydraulic motor (10, 20, 30, 40) fed in a closed circuit by at least one pump (50, 52) having a variable cubic capacity, the system comprising friction brake means (13, 23, 33, 43) for braking the motor, brake control means (70) for causing braking to take place, means (76, 77) for determining a level of actuation of said control means and for detecting an emergency braking situation or a normal braking situation as a function of the level of actuation of the brake control means (70), and braking management means which, in a normal braking situation, are suitable for causing progressive hydrostatic braking to take place, and, in an emergency braking situation, are suitable for causing sudden hydrostatic braking to take place;
said brake system being **characterised in that** the brake control means are suitable for causing the friction braking and the hydrostatic braking to take place, both of these braking types being combined, and **in that**, in a normal braking situation, the braking management means (ECU) are suitable for causing progressive hydrostatic braking to take place by causing the ratio between the fluid flow rate delivered by the pump (50, 52) and the active cubic capacity of the motor (10, 20, 30, 40) to decrease progressively, in compliance with an order determined as a function of the level of actuation of the brake control means (70), of a parameter representative of the speed of the vehicle, of the active cubic capacity of the pump, and of the active cubic capacity of the motor, whereas, in an emergency braking situation, said management means are suitable for successively causing a sudden decrease to take place in the ratio between the fluid flow rate delivered by the pump and the active cubic capacity of the motor, and then causing progressive hydrostatic braking to take place.

2. A system according to claim 1, **characterised in that**, in an emergency braking situation, and as a function of a parameter representative of the speed of the vehicle, of the active cubic capacity of the pump, and of the active cubic capacity of the motor, the braking management means (ECU) are suitable for successively causing a sudden decrease to take place in the ratio between the fluid flow rate delivered by the pump and the active cubic capacity of the motor, and for causing progressive hydrostatic braking to take place.

3. A system according to claim 1 or claim 2, **characterised in that**, in an emergency braking situation, the braking management means are suitable for successively causing a sudden decrease to take place in the fluid flow-rate delivered by the pump, and then causing progressive hydrostatic braking to take place.

4. A system according to claim 3, **characterised in that** the sudden decrease in the fluid flow rate delivered by the pump (50, 52) is achieved by means of a sudden decrease in the cubic capacity of the pump.

5. A system according to claim 4, **characterised in that** the value of the sudden decrease in the cubic capacity of the pump (50, 52) is a predetermined proportion of the active cubic capacity of the pump at the time of braking.

6. A system according to any one of claims 1 to 5, in which the motor (10, 20, 30, 40) has a plurality of active operating cubic capacities (10A, 10B, 20A, 20B, 30A, 30B, 40A, 40B), **characterised in that**, when braking is caused to take place while the motor is in a small active cubic capacity, the braking management means (ECU) are suitable for causing the motor to go over to a larger active cubic capacity when the value of the active cubic capacity of the pump is less than or equal to a limit value (CP3), then for increasing the value of said active cubic capacity of the pump to a value (CP4) determined as a result of the motor going over to said larger active cubic capacity so as to prevent said motor from generating a sudden decrease in the speed of the motor, and for progressively decreasing the cubic capacity of the pump from said determined value.

7. A system according to claim 6, **characterised in that**, in an emergency braking situation, the braking management means (ECU) are suitable for causing said motor to go over to said larger active cubic capacity, after said sudden decrease in the fluid flow rate delivered by the pump.

8. A system according to claim 6 or claim 7, **characterised in that**, in a normal braking situation, the braking management means (ECU) are suitable for maintaining the cubic capacity of the pump (50, 52) at a given value corresponding to the motor being allowed to go over to its large active cubic capacity, for a stabilization lapse of time before the motor is caused to go over to its large active cubic capacity, whereas, in an emergency braking situation, said braking management means are suitable for decreasing or substantially cancelling said stabilization lapse of time.

9. A system according to any one of claims 6 to 8, for a vehicle having a plurality of displacement members, disposed in succession in the direction in which the vehicle travels, and driven by different motors, said system being **characterised in that** the braking management means (ECU) are suitable for causing the hydraulic motor(s) (10, 20) that drive the displacement member(s) to go over to the larger active cubic capacity prior to or at the time of braking, without modifying the active cubic capacity of the motor(s) (30, 40) that drive the other displacement member(s).

10. A system according to any one of claims 1 to 9, **characterised in that**, with the pump (50, 52) being driven by an auxiliary engine (54), in particular a heat engine, the braking management means are suitable for causing the drive speed of said heat engine to be reduced at least at the beginning of a braking stage.

11. A system according to any one of claims 1 to 10, **characterised in that** the brake control means comprise a manoeuvrable control member (70) and the friction brake means (13, 23, 33, 43) comprise at least two brake members (14) constrained to rotate respectively with the rotor and with the stator of the motor, and an actuator (15) whose moving portion co-operates with one of said members to urge it into friction contact with the other member as a function of the fluid pressure in the actuator, and **in that** the means (76, 77) for detecting a level of actuation of the control means are suitable for detecting the amplitude of actuation of said control member or the fluid pressure in the actuator.

12. A system according to any one of claims 1 to 11, **characterised in that** it comprises means (82) for determining the fluid pressure in a feed duct of the hydraulic motor that is at the high pressure during the braking stage, and **in that** said fluid pressure is taken into account in determining the order used by the braking management means for causing the hydrostatic braking to take place.
